(19)

**Europäisches Patentamt**
**European Patent Office**
**Office européen des brevets**

(11) **EP 4 674 717 A1**

(12) **EUROPEAN PATENT APPLICATION**

(43) Date of publication:
**07.01.2026  Bulletin 2026/02**

(21) Application number: **25154403.7**

(22) Date of filing: **28.01.2025**

(51) International Patent Classification (IPC):
**B60W 30/095** *(2012.01)*     **B60W 60/00** *(2020.01)*
**B60W 50/029** *(2012.01)*

(52) Cooperative Patent Classification (CPC):
**B60W 30/0956; B60W 60/0011; B60W 60/0015;**
**B60W 60/0018; B60W 60/00186; B60W 60/0059;**
B60W 2050/0292; B60W 2050/0295;
B60W 2520/10; B60W 2552/10; B60W 2552/53;
B60W 2554/402; B60W 2554/801; B60Y 2302/05

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **01.07.2024   KR 20240086265**

(71) Applicants:
• **Hyundai Motor Company**
  **Seoul 06797 (KR)**
• **Kia Corporation**
  **Seoul 06797 (KR)**

• **Ajou University Industry-Academic Cooperation**
  **Foundation**
  **Suwon-si, Gyeonggi-do 16499 (KR)**

(72) Inventors:
• **JANG, Chan Jong**
  **18280 Hwaseong-si, Gyeonggi-do (KR)**
• **MIN, Young bin**
  **18280 Hwaseong-si, Gyeonggi-do (KR)**
• **SONG, Bong Sob**
  **16499 Suwon-si, Gyeonggi-do (KR)**

(74) Representative: **Viering, Jentschura & Partner**
  **mbB**
  **Patent- und Rechtsanwälte**
  **Am Brauhaus 8**
  **01099 Dresden (DE)**

(54) **VEHICLE FOR CONTROLLING STEERING IN STOPPING ON SHOULDER DURING AUTONOMOUS DRIVING AND METHOD OF OPERATING THE VEHICLE**

(57)    An apparatus for controlling autonomous driving of a vehicle may comprise at least one sensor configured to detect the surrounding environment of the vehicle and generate surrounding environment information. A processor monitors the state of the vehicle to generate vehicle state information and determines, based on either the surrounding environment information or the vehicle state information, whether to perform a risk maneuver during autonomous driving. If a risk maneuver is determined, the processor identifies the risk maneuver type. If the risk maneuver type is a shoulder stop, the processor determines a shoulder stop allowance space and, based on this space, calculates a shoulder driving trajectory. The processor outputs a signal indicating the shoulder driving trajectory and controls the vehicle's autonomous driving based on the signal.

FIG. 1

EP 4 674 717 A1

**Description**

**PRIORITY CLAIM AND CROSS REFERENCE TO RELATED APPLICATION**

This patent document claims the priority and benefits of Korean Patent Application No. 10-2024-0086265, filed on July 1, 2024, which is incorporated by reference in its entirety as part of the disclosure of this patent document.

**TECHNICAL FIELD**

Various examples of the disclosed technology relate to a vehicle configured to control steering when stopping the vehicle on a shoulder according to a minimal risk maneuver during an autonomous driving, and a method for operating the same.

**BACKGROUND**

The matters described in this Background section are only for enhancement of understanding of the background of the disclosure, and should not be taken as acknowledgement that they correspond to prior art already known to those skilled in the art.
Advanced driver assistance systems (ADAS) are being developed to assist drivers in driving. The ADAS has multiple sub-classifications and provides convenience to the driver. Such ADAS is also called autonomous driving or ADS (Automated Driving System).
Meanwhile, an abnormality may occur in the autonomous driving system while the vehicle performs autonomous driving. The vehicle may get into a dangerous state if appropriate measures are not taken against such abnormality in the autonomous driving system.

**SUMMARY**

According to the present disclosure, an apparatus for controlling autonomous driving of a vehicle, the apparatus may comprise at least one sensor configured to detect a surrounding environment of the vehicle and generate surrounding environment information, a processor configured to monitor a state of the vehicle to generate vehicle state information, determine, based on at least one of the surrounding environment information or the vehicle state information, whether to perform a risk maneuver for the autonomous driving of the vehicle, determine, based on a determination to perform the risk maneuver, a risk maneuver type, determine, based on the risk maneuver type being a shoulder stop type, a shoulder stop allowance space, determine, based on the shoulder stop allowance space, a shoulder driving trajectory, output a signal indicating the shoulder driving trajectory, and control, based on the signal, the autonomous driving of the vehicle.
The apparatus, wherein the shoulder stop allowance space may comprise a virtual region having a longitudinal size and a lateral size, and wherein the processor is configured to determine, based on a speed of the vehicle and a preset time required for shoulder stop, the longitudinal size.
The apparatus, wherein the processor is configured to determine the longitudinal size based on a product of the speed of the vehicle and the preset time required for shoulder stop.
The apparatus, wherein the processor is configured to determine, based on a width of a shoulder and a preset allowable lane crossing distance, the lateral size.
The apparatus, wherein the processor is configured to recognize the shoulder, determine, based on the surrounding environment information, the width of the shoulder, and determine, based on a sum of the preset allowable lane crossing distance and the width of the shoulder, the lateral size.
The apparatus, wherein the processor is configured to determine, based on the surrounding environment information, whether the shoulder has a curved shape, and based on a determination that the shoulder has the curved shape, determine the shoulder stop allowance space by rotating a quadrangular virtual region about a center point of a bumper of the vehicle.
The apparatus, wherein the processor is configured to, based on the surrounding environment information during the autonomous driving of the vehicle, recognize a plurality of shoulders, and select, based on a line neighboring to a shoulder in the shoulder stop allowance space and a line crossing distance, a final shoulder among the plurality of shoulders for stopping, wherein the line crossing distance indicates a degree at which the vehicle deviates in an inward direction of the line.
The apparatus, wherein the processor is configured to select a shoulder having the line crossing distance as the final shoulder for stopping, and wherein the line crossing distance is a smallest line crossing distance among a plurality of line crossing distances respectively associated with the plurality of shoulders.
The apparatus, wherein the processor is configured to determine, based on a width of the vehicle, a width of the shoulder, and a preset margin constant of stopping, the line crossing distance.

The apparatus, wherein the line crossing distance is based on a difference between a width of the vehicle and a width of a shoulder and based on an added preset margin constant of stopping.

The apparatus, wherein the processor is configured to determine, based on the surrounding environment information, a location of a collision risk object within the shoulder stop allowance space, and determine, based on the location of the collision risk object, a plurality of driving trajectories within the shoulder stop allowance space.

The apparatus, wherein the processor is configured to derive an adjusted shoulder driving trajectory by inputting the plurality of driving trajectories to an artificial intelligence learning model.

According to the present disclosure, a method performed by an apparatus for controlling autonomous driving of a vehicle, the method may comprise obtaining surrounding environment information by detecting a surrounding environment of the vehicle during the autonomous driving of the vehicle, obtaining vehicle state information by monitoring a state of the vehicle during the autonomous driving of the vehicle, determining, based on at least one of the surrounding environment information or the vehicle state information, whether to perform a risk maneuver for the autonomous driving of the vehicle, determining, based on a determination to perform the risk maneuver, a risk maneuver type, determining, based on the risk maneuver type being a shoulder stop type, a shoulder stop allowance space, determining, based on the shoulder stop allowance space, a shoulder driving trajectory, outputting a signal indicating the shoulder driving trajectory, and controlling, based on the signal, the autonomous driving of the vehicle.

The method, wherein the shoulder stop allowance space may comprise a virtual region having a longitudinal size and a lateral size, and wherein the determining the shoulder stop allowance space may comprise determining, based on a speed of the vehicle and a preset time required for shoulder stop, the longitudinal size.

The method, wherein the determining the longitudinal size may comprise determining, based on a width of a shoulder and a preset allowable lane crossing distance, the lateral size.

The method, wherein the determining the lateral size may comprise identifying, based on the surrounding environment information, the shoulder and determining the width of the shoulder, and determining, based on a sum of the preset allowable lane crossing distance and the width of the shoulder, the lateral size.

The method, wherein the determining shoulder stop allowance space may further comprise determining, based on the surrounding environment information, whether the shoulder has a curved shape, and based on determining that the shoulder has a curved shape, determining the shoulder stop allowance space by rotating a quadrangular virtual region about a center point of a bumper of the vehicle.

The method may further comprise identifying, based on the surrounding environment information during the autonomous driving of the vehicle, a plurality of shoulders, and selecting, based on a line neighboring to a shoulder in the shoulder stop allowance space and a line crossing distance, a final shoulder among the plurality of shoulders for stopping, wherein the line crossing distance indicates a degree at which the vehicle deviates in an inward direction of the line.

The method, wherein the selecting the final shoulder for stopping may comprise determining, based on a width of the vehicle, a width of the shoulder, and a preset margin constant of stopping, the line crossing distance.

The method, wherein the determining the shoulder driving trajectory may comprise determining, based on the surrounding environment information, a location of a collision risk object within the shoulder stop allowance space, determining, based on the location of the collision risk object, a plurality of driving trajectories within the shoulder stop allowance space, and deriving an adjusted shoulder driving trajectory by inputting the plurality of driving trajectories to an artificial intelligence learning model.

## BRIEF DESCRIPTION OF THE DRAWINGS

FIG. 1 shows an example of a block diagram of a vehicle according to various examples of the present disclosure.

FIG. 2 shows an example of a functional block diagram of a processor according to various examples of the present disclosure.

FIG. 3 shows an example of minimum risk maneuver (MRM) strategies for each vehicle state according to various examples of the present disclosure.

FIG. 4a and FIG. 4b show examples of determining an MRM strategy based on surrounding environment information within a specified MRC range of a vehicle according to various examples of the present disclosure.

FIG. 5 shows an example in which a priority of an MRM strategy is changed according to surrounding object information within a specified MRC range of a vehicle according to various examples of the present disclosure.

FIG. 6a to FIG. 6c show examples of determining whether a vehicle collides with a neighboring vehicle by an MRM of a vehicle according to various examples of the present disclosure.

FIG. 7 shows an example of determining an MRM strategy of a vehicle considering whether the vehicle collides with a neighboring vehicle by an MRM of a vehicle according to various examples of the present disclosure.

FIG. 8a and FIG. 8b show examples of determining a distance from a vehicle according to various examples of the present disclosure to a neighboring vehicle.

FIG. 9 shows an example of an operation of a vehicle according to various examples of the present disclosure.

FIG. 10 shows an example of determining an MRM strategy by a vehicle according to various examples of the present disclosure.

FIG. 11 shows an example of determining a shoulder stop allowance space and a shoulder driving trajectory when shoulder stop is conducted during an autonomous driving according to various examples of the present disclosure.

FIG. 12 shows an example of determining a shoulder stop allowance space when a final MRM strategy according to various examples of the present disclosure is a stop within shoulder type.

FIG. 13 shows an example of determining a shoulder stop allowance space when a final MRM strategy according to various examples of the present disclosure is a shoulder stop with lateral deviation type.

FIG. 14 shows an example of determining a shoulder stop allowance space when a final MRM strategy according to various examples of the present disclosure is a merge stop with double-side lateral deviation type.

FIG. 15 and FIG. 16 show examples of determining a shoulder stop allowance space by a vehicle according to various examples of the present disclosure.

FIG. 17 and FIG. 18 show examples of determining a shoulder driving trajectory by a vehicle according to various examples of the present disclosure.

DETAILED DESCRIPTION

Hereinafter, examples of the present disclosure will be described in further detail with reference to the accompanying drawings.

The configuration and advantages of the present disclosure will be more apparent from the following detailed description. Wherever possible, the same reference numerals will be used throughout the drawings to refer to the same elements even if shown in another drawing. It will be paid attention that detailed description of known arts will be omitted if it is determined that the arts may mislead the present disclosure.

Before describing the present disclosure in detail, terms being used in the present disclosure may be defined as below.

The vehicle is equipped with an Automated Driving System (ADS) and is a vehicle capable of autonomous driving. For example, by the ADS, the vehicle may perform at least one among steering, acceleration, deceleration, lane change, and stopping (or short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is a human being provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and examples of the present disclosure are not limited thereto.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., a minimum risk maneuver) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., a minimum risk maneuver) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., a minimum risk maneuver) described herein.

Biased driving operation(s) may also be controlled, for example, based on one or more features (e.g., a minimum risk maneuver) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., a minimum risk maneuver) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

A shoulder may mean a space between an outermost road boundary (or a boundary of an outermost lane) in a direction in which a vehicle is traveling and a road edge (e.g., kerb, guardrail).

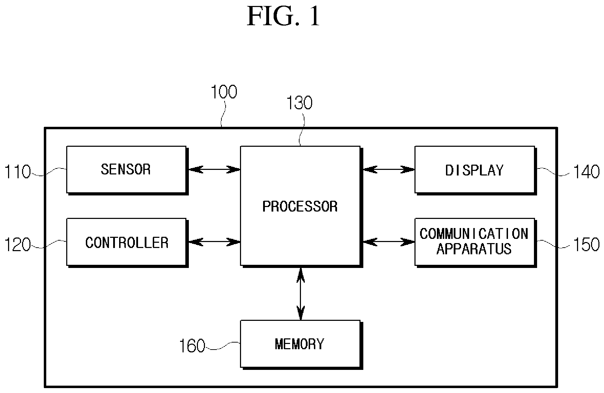

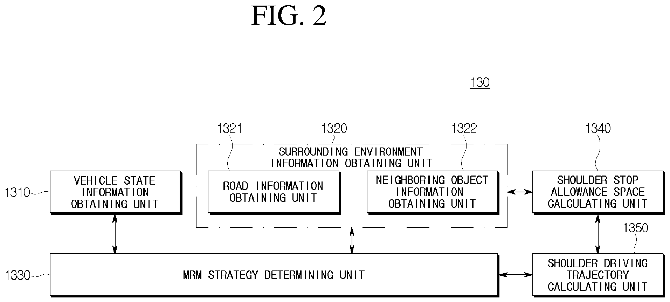

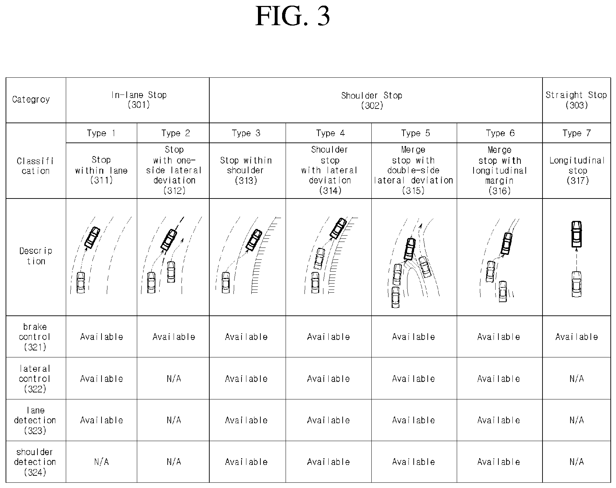

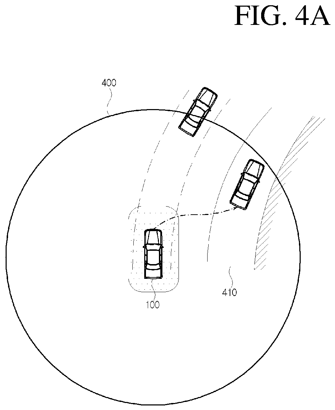

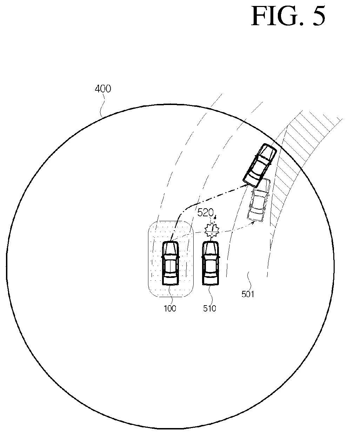

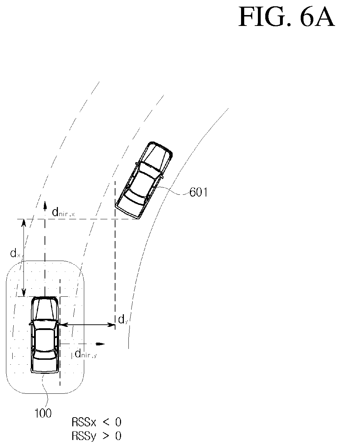

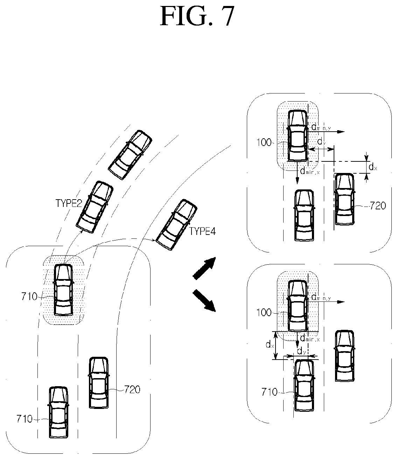

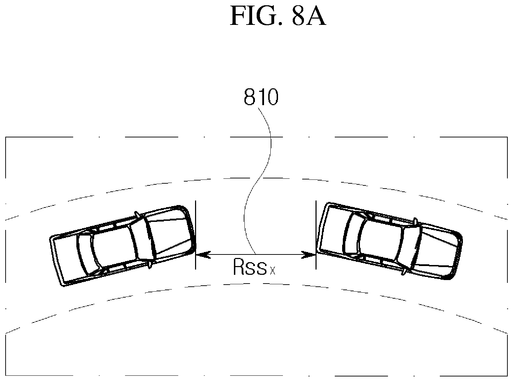

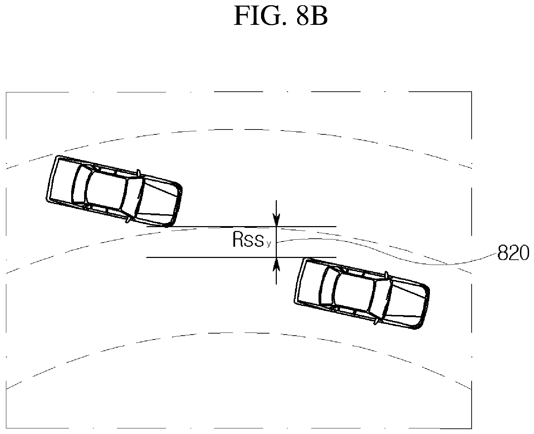

FIG. 1 shows an example of a block diagram of a vehicle according to various examples of the present disclosure. The configuration of the vehicle shown in FIG. 1 is one example, and each component may be configured as one chip, one component, or one electronic circuit, or a combination of chips, components, and/or electronic circuits. According to the example, some of the components shown in FIG. 1 may be divided into a plurality of components and configured as different chips, different components, or different electronic circuits, and some components may be combined to form one chip, one component, or one electronic circuit. According to the example, some of the components shown in FIG. 1 may be omitted or other components not shown may be added. At least some of the components of FIG. 1 will be described with reference to FIGS. 2 to 8. FIG. 2 shows an example of a functional block diagram of a processor according to various examples of the present disclosure, and FIG. 3 shows an example of minimum risk maneuver (MRM) strategies for each vehicle state according to various examples of the present disclosure. FIGS. 4a to 4b show examples of determining an MRM strategy based on surrounding environment information within a specified MRC range of a vehicle according to various examples of the present disclosure, and FIG. 5 shows an example in which a priority of an MRM strategy is changed according to surrounding object information within a specified MRC range of a vehicle according to various examples of the present disclosure. FIGS. 6a to 6c show examples of determining whether a vehicle collides with a neighboring vehicle by an MRM of a vehicle according to various examples of the present disclosure, and FIG. 7 shows an example of determining an MRM strategy of a vehicle considering whether the vehicle collides with a neighboring vehicle by an MRM of a vehicle according to various examples of the present disclosure. FIGS. 8a and 8b show examples of determining a distance from a vehicle according to various examples of the present disclosure to a neighboring vehicle.

Referring to FIG. 1, the vehicle 100 may include a sensor 110, a controller 120, a processor 130, a display 140, a communication apparatus 150, and a memory 160.

According to various examples, the sensor 110 may sense an environment around the vehicle 100 using at least one sensor and generate data related to the surrounding environment of the vehicle 100 based on the sensing result. According to the example, the sensor 110 may obtain road information, information on objects around the vehicle (e.g., other vehicles, people, objects, kerbs, guardrails, lanes, obstacles) and/or location information of the vehicle based on the sensing data obtained from at least one sensor. The road information may include, for example, at least one among line location, a shape of a lane, a color of a lane, a type of a lane, a quantity of lines, whether a shoulder exists, or a size of a shoulder. The object around the vehicle may include, for example, at least one among a position of the object, a size of the object, a shape of the object, a distance to the object, and a relative speed to the object.

According to the example, the sensor 110 may include at least one selected among a camera, a light detection and ranging (LIDAR) sensor, a radio detection and ranging (RADAR) sensor, an ultrasonic sensor, an infrared sensor, and a location measurement sensor. The listed sensors are merely examples for helping understanding, and the sensors included in the sensor 110 of the present disclosure are not limited thereto. The camera may photograph the surroundings of the vehicle 100 to generate image data that includes a lane and/or neighboring object positioned in front, on a rear side, and/or on a side of the vehicle 100. The LIDAR may generate information on an object located in front, on a rear side, and/or on a side of the vehicle 100 using light (or a laser). The radar may generate information on an object located in front, on a rear side and/or on a side of the vehicle 100 using electromagnetic waves (or radio waves). The ultrasonic sensor may generate information on an object located in front, on a rear side and/or on a side of the vehicle 100 using ultrasonic waves. The infrared sensor may generate information on an object located in front, on a rear side and/or on a side of the vehicle 100 using infrared rays. The location measurement sensor may measure the current location of the vehicle 100. The location measurement sensor may include at least one among a Global Positioning System (GPS) sensor, a Differential Global Positioning System (DGPS) sensor and a Global Navigation Satellite System (GNSS) sensor. The location measurement sensor may generate location data of the vehicle based on a signal generated by at least one among a GPS sensor, DGPS sensor and GNSS sensor.

According to various examples, the controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function.

According to the example, the controller 120 may control at least one component of the vehicle and/or at least one function of the vehicle for autonomous driving and/or a minimal risk maneuver (MRM) of the vehicle 100 according to the control of the processor 130. For example, for the MRM, the controller 120 may control the operation of at least one function among a steering function, an acceleration function, a deceleration function, a lane change function, a lane detection function, a lateral control function, an obstacle recognition and distance detection function, a powertrain control function, and a safe zone detection function.

A minimal risk maneuvering operation (e.g., a minimal risk maneuver, a minimum risk maneuver, a risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Examples of minimal risk maneuvers (e.g., different risk maneuver types) may comprise pulling over to the shoulder and stopping, decelerating and stopping in the current lane, performing a slow lane change followed by a stop, exiting the highway and stopping, pulling over to the curb in urban areas, gradually decelerating to a stop in a safe zone, activating hazard lights while reducing speed, stopping in a parking lot or designated area, coming to a controlled stop in a traffic jam, biased driving operation(s), or slowing down and stopping at an intersection, etc.

According to various examples, the processor 130 may control the overall operation of the vehicle 100. According to the example, the processor 130 may include an electrical control unit (ECU) capable of integrally controlling components in the vehicle 100. For example, the processor 130 may include a central processing unit (CPU) or micro processing unit (MCU) capable of performing arithmetic processing.

According to various examples, when a specified event is generated, the processor 130 may activate the Automated Driving System (ADS) to control components in the vehicle 100 so that the vehicle performs an autonomous driving. The specified event may be generated when autonomous driving of the driver is requested, the vehicle control authority from the driver is delegated, or a condition specified by the driver and/or designer is satisfied.

According to various examples, the processor 130 may determine whether normal autonomous driving is possible based on at least one among vehicle state information and surrounding environment information during an autonomous driving. If normal autonomous driving is impractical, the processor 130 may determine an MRM strategy and control the determined MRM strategy to be performed. Here, the MRM strategy may include MRM types.

According to the example, the processor 130 may include a vehicle state information obtaining unit 1310, a surrounding environment information obtaining unit 1320, and an MRM strategy determining unit 1330, a shoulder stop allowance space determining unit 1340, and a shoulder driving trajectory determining unit 1350, as shown in FIG. 2.

From the time when ADS is activated, the vehicle state information obtaining unit 1310 may obtain vehicle state information indicating whether mechanical and/or electrical faults of components inside the vehicle occur or not, by monitoring mechanical and/or electrical states of components inside the vehicle (e.g., sensors, actuators, and the like). The vehicle state information may include information about mechanical states and/or electrical states of components inside the vehicle. For example, the vehicle state information may include information indicating whether functions necessary or useful for autonomous driving may normally operate or not according to mechanical and/or electrical states of components inside the vehicle.

The surrounding environment information obtaining unit 1320 may obtain environment information around the vehicle using the sensor 110 and/or the communication apparatus 150 from the time when the ADS is activated. The surrounding environment information obtaining unit 1320 may include a road information obtaining unit 1321 for obtaining information on a road on which the vehicle is traveling, and a neighboring object information obtaining unit 1322 for detecting an object around the vehicle from the sensor 110.

According to the example, the road information obtaining unit 220 may obtain road information of a location in which the vehicle is traveling through the sensor 110. According to the example, the road information obtaining unit 220 may obtain map information from an external device (e.g., another vehicle or a server) through the communication apparatus 150, and obtain road information of a location in which the vehicle is traveling from the map information.

According to the example, the neighboring object information obtaining unit 1322 may obtain information on objects (e.g., other vehicles, people, objects, kerbs, guard rails, lanes, obstacles) around the vehicle through the sensor 110. For example, the neighboring object information obtaining unit 1322 may obtain a distance to at least one vehicle located on a front-lateral side, on a side, and/or on a rear-lateral side of the vehicle and a relative speed thereto.

According to the example, the processor 130 may determine whether functions necessary or useful for autonomous driving are normally operable based on the vehicle state information. Functions necessary or useful for autonomous driving may include, for example, at least one among a lane detection function, a lane change function, a lateral control function, a deceleration (or brake control) function, a powertrain control function, a safe area detection function, an obstacle recognition function, and a distance sensing function. If the normal operation of at least one among the functions necessary or useful for autonomous driving is impractical, the processor 130 may determine that normal autonomous driving is impractical.

According to the example, the processor 130 may determine whether the vehicle state is suitable for general driving conditions based on the vehicle state information. For example, the processor 130 may determine whether the vehicle's mechanical state information (e.g., tire air pressure information or engine overheat information) is suitable for general driving conditions. If the vehicle state is not suitable for general driving conditions, the processor 130 may determine that normal autonomous driving is impractical. For example, if the vehicle may not be driven due to tire air pressure or engine overheating, the processor 130 may determine that normal autonomous driving is impractical.

According to the example, the processor 130 may determine whether an environment around the vehicle is suitable for an operation design domain (ODD) of autonomous driving based on at least one among the surrounding environment information. The operation design domain may represent a condition for the surrounding environment in which autonomous driving normally operates. The processor 130 may determine that normal autonomous driving is impractical if the surrounding environment information of the vehicle does not match the operation design domain.

According to various examples, if the normal autonomous driving is impractical, the processor 130 may determine it as a situation in which the MRM to minimize the risk of an accident is needed. The processor 130 may select one strategy among a plurality of the MRM strategies by using the MRM strategy determining unit 1330 in a situation in which it is necessary or useful to perform the MRM. The MRM strategies may include seven types, as shown in FIG. 3. For example, the MRM strategies may include an in-lane stop strategy 301 including Type 1 and Type 2, a shoulder stop strategy 302 including Type 3 to Type 6, and a straight stop strategy 303 including Type 7.

The in-lane stop strategy 301 may include stop within lane 311 of Type 1, and stop with one-side lateral deviation 312 of Type 2. The shoulder stop strategy 302 may include stop within shoulder 313 of Type 3, shoulder stop with lateral deviation 314 of Type 4, merge stop with double-side lateral deviation 315 of Type 5, and merge stop with longitudinal margin 316 of Type 6. The straight stop strategy 303 may include longitudinal stop 317 of Type 7.

The stop within a lane 311 of Type 1 is a type in which the vehicle stops within a boundary of the lane in which it is

7

traveling. For example, the stop within a lane 311 may mean a type in which the vehicle stops within a boundary of a lane in which the vehicle is traveling through the brake control 321, the lateral control 322, and/or lane detection 323. The driving lane may mean a lane in which the vehicle is traveling at a time when it is determined that the MRM is needed. The stop within a lane 311 may be performed in a situation in which a function of shoulder detection 324 is impractical.

The stop with one-side lateral deviation 312 of Type 2 is a type in which the vehicle stops on a side surface of a lane in which it is traveling. For example, the stop with one-side lateral deviation 312 may mean a type in which the vehicle stops on a side surface of the lane through the brake control 321. The stop with one-side lateral deviation 312 may be performed in a situation in which at least one function among the lateral control 322, the lane detection 323, and the shoulder detection 324 is impractical.

The stop within shoulder 313 of Type 3 is a type in which the vehicle stops in a state in which the entire vehicle is located on a shoulder of a road. For example, the stop within shoulder 313 may mean a type in which the vehicle stops after the whole vehicle moves out of the road boundary and moves to be located on the shoulder through the brake control 321, the lateral control 322, the lane detection 323, and/or the shoulder detection 324.

The shoulder stop with lateral deviation 314 of Type 4 is a type in which the vehicle stops in a state in which a portion of the vehicle is located on a shoulder of a road. For example, the shoulder stop with lateral deviation 314 may mean a type in which the vehicle stops in a state in which a portion of the vehicle is located on a shoulder after moving to be out of a road boundary (or boundary of the outermost lane) through the brake control 321, the lateral control 322, the lane detection 323, and/or the shoulder detection 324.

The merge stop with double-side lateral deviation 315 of Type 5 is a type in which the vehicle stops on a shoulder of a merging point at which vehicles join from both roads. For example, the merge stop with double-side lateral deviation 315 may mean a type in which the vehicle stops in a state in which the whole vehicle, or a portion thereof moves to be located on a shoulder of a merging point through the brake control 321, the lateral control 322, the lane detection 323, and/or the shoulder detection 324.

The merge stop with longitudinal margin 316 of Type 6 is a type in which the vehicle stops on a shoulder of a merging point at which vehicles join from a road such as a merging point of an expressway entrance. For example, the merge stop with longitudinal margin 316 may mean a type in which the vehicle stops after the whole vehicle, or a portion thereof moves to be located on a shoulder of a merging point through the lateral control 322, the lane detection 323, and/or the shoulder detection 324.

The longitudinal stop 317 of Type 7 is a type in which the vehicle stops by using the brake control 321 only, which is a longitudinal deceleration function, without applying the lateral control. For example, the longitudinal stop 317 may be performed in a situation where at least one among the lateral control 322, the lane detection 323, and/or the shoulder detection 324 is impractical. For example, the longitudinal stop 317 may be performed in a situation where the lane detection is impractical, and the lateral control is impractical due to the defect of the actuator. At this instance, the detection of potential stopping location outside the lane may mean a function of detecting a potential stopping location outside a lane, such as a shoulder or a rest area.

According to the example, the priority of the above-described MRM types may be decided based on a road, the surrounding environment, and fail-operational capability which is a limit to which a vehicle tolerate a failure. For example, a priority of the MRM types corresponding to the shoulder stop strategy 302 may be set to be higher than a priority of the MRM types corresponding to the in-lane stop strategy 301 so as to minimize danger when stopping the vehicle. Further, a priority of the stop within shoulder 313 may be set to be higher than a priority of the shoulder stop with lateral deviation 314, and a priority of the stop within a lane 311 may be set to be higher than a priority of the longitudinal stop 317. For example, the priority of the MRM types may be set to be reduced in the order of the stop within shoulder 313, the shoulder stop with lateral deviation 314, the stop within a lane 311, and the longitudinal stop 317.

According to various examples, the MRM strategy determining unit 1330 may select an MRM strategy based on at least one among the vehicle state information and the surrounding environment information.

According to the example, the MRM strategy determining unit 1330 may check an MRM type that may be performed among the above-described MRM types based on a function that normally operates and/or a function that may not normally operate among functions needed for autonomous driving based on the vehicle status information. For example, if the lateral control function operates normally, it may be determined that all the MRM types, which are the stop within lane 311, the stop with one-side lateral deviation 312, the stop within shoulder 313, the shoulder stop with lateral deviation 314, the merge stop with double-side lateral deviation 315, the merge stop with longitudinal margin 316, and the longitudinal stop 317, may be performed. As another example, if the lateral control function does not operate normally, the longitudinal stop 317 may be determined as the MRM type that may be performed.

If there is one MRM type that may be performed based on the vehicle state information, the MRM strategy determining unit 1330 may determine the corresponding MRM type as the MRM strategy. For example, the MRM strategy determining unit 1330 may only perform the longitudinal stop 317 in a situation where the lateral control function does not operate normally, thus the longitudinal stop 317 may be determined as the MRM strategy. As another example, if a driving lane is not detected due to a sensor defect and/or an external environment, the MRM strategy determining unit 1330 may perform the longitudinal stop 317 only, and accordingly, the longitudinal stop 317 may be determined as the MRM strategy.

If there are a plurality of MRM types that may be performed based on the vehicle state information, the MRM strategy determining unit 1330 may determine an MRM type that may be performed within a specified minimum risk condition (MRC) range. According to the example, the specified MRC range may be set and/or changed by operators and/or designers. According to the example, the specified MRC range may be set differently depending on vehicle performance, a vehicle type, and/or external environmental factors (e.g., weather, time, etc.).

According to the example, the MRM strategy determining unit 1330 may determine an MRM type that may be performed within the MRC range based on whether a shoulder exists within the specified MRC range. When the shoulder does not exist within the specified MRC range, the MRM strategy determining unit 1330 may determine at least one among the stop within lane 311, the stop with one-side lateral deviation 312, and the longitudinal stop 317 as the MRM type that may be performed within the MRC range.

When the shoulder exists within the specified MRC range, the MRM strategy determining unit 1330 may determine the MRM type that may be performed within the MRC range based on a size of the shoulder. If the size of the shoulder within the specified MRC range is greater than or equal to the specified size, the MRM strategy determining unit 1330 may determine the stop within shoulder 313, the shoulder stop with lateral deviation 314, the merge stop with double-side lateral deviation 315, the merge stop with longitudinal margin 316, the stop within lane 311, the stop with one-side lateral deviation 312, and the longitudinal stop 317 as the MRM types that may be performed within the MRC range. The specified size may be determined based on a size of the vehicle. If the size of the shoulder is smaller than the specified size, the MRM strategy determining unit 1330 may determine the shoulder stop with lateral deviation 314, the merge stop with double-side lateral deviation 315, the merge stop with longitudinal margin 316, the stop within lane 311, the stop with one-side lateral deviation 312, and the longitudinal stop 317 as the MRM types that may be performed within the MRC range.

According to various examples, the MRM strategy determining unit 1330 may select a final MRM strategy in consideration of the priority and/or neighboring object information when there are a plurality of MRM types that may be performed within the specified MRC range.

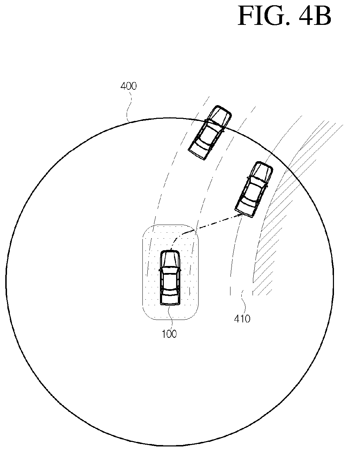

According to the example, if there are a plurality of MRM types that may be performed within the specified MRC range, the MRM strategy determining unit 1330 may determine the MRM type having the highest priority as the final MRM strategy among the MRM types that may be performed within the specified MRC range. For example, as shown in FIG. 4a, if a width of the shoulder 410 within the specified MRC range 400 is greater than a width of the vehicle 100, the MRM strategy determining unit 1330 may determine the stop within shoulder 313 having the highest priority as the final MRM strategy among the MRM types that may be performed within the MRC range 400. As another example, as shown in FIG. 4b, if a width of the shoulder 420 within the specified MRC range 400 is smaller than a width of the vehicle 100, the MRM strategy determining unit 1330 may determine the shoulder stop with lateral deviation 314 having the highest priority as the final MRM strategy among the MRM types that may be performed within the specified MRC range 400.

According to the example, the MRM strategy determining unit 1330 may determine the final MRM strategy by additionally taking into consideration a risk associated with performing the MRM strategy within the specified MRC range. For example, as shown in FIG. 5, a case is assumed, in which the shoulder 501 exists within the MRC range 400, but a width of an area adjacent to the vehicle 100 among the areas of the shoulder 501 within the MRC range 400 is greater than a width of the vehicle 100 and a width of the area located far from the vehicle 100 is smaller than the width of the vehicle 100. For example, a case in which the shoulder 501 having a gradually decreasing width exists within the MRC range 400 is assumed for description. In this case, the MRM strategy determining unit 1330 may select the stop within shoulder 313 having the highest priority based on the width of the shoulder 501. However, at the time of performing the stop within shoulder 313, if there is a risk of a collision 520 with another vehicle 510, the MRM strategy determining unit 1330 may select the shoulder stop with lateral deviation 314 having a lower priority than the stop within shoulder 313 as the final MRM strategy, since the shoulder stop with lateral deviation 314 does not have a risk of colliding with another vehicle 510.

According to the example, if there are a plurality of MRM types that may be performed within the specified MRC range, the MRM strategy determining unit 1330 may select the final MRM strategy in consideration of a possibility of a collision and/or whether there is a liability for an accident. The MRM strategy determining unit 1330 may determine the possibility of a collision with the neighboring vehicles and whether there is a liability for an accident in the event of a collision based on a driving path for each of the MRM types which may be performed within the specified MRC range. With respect to the stop within shoulder 313 and/or the shoulder stop with lateral deviation 314 requiring a lane change, the MRM strategy determining unit 1330 may determine the possibility of a collision and/or the liability for an accident with a vehicle located on the front-lateral side of the vehicle, a vehicle located on a side, and/or a vehicle located on a rear-lateral side among the neighboring vehicles. With respect to the stop within lane type that does not require a lane change, the MRM strategy determining unit 1330 may determine the possibility of a collision and/or the liability for an accident with a vehicle located on a rear side among the neighboring vehicles.

In order to determine the possibility of a collision with the neighboring vehicles and/or whether there is a liability for an accident, the MRM strategy determining unit 1330 may calculate or determine a safety distance representing a difference between a minimum relative distance and an actual relative distance to the neighboring vehicle based on Responsibility Sensitivity Safety (RSS) model as shown in Mathematical Equations 1 and 2, and may determine the possibility of a collision and whether there is liability for an accident based on the calculated or determined safety distance,.

$$RSS_x = d_x - d_{min,x}$$

$$RSS_y = d_y - d_{min,y}$$

$$\dots\dots \text{Equation (1)}$$

Here, $RSS_x$ means the longitudinal safety distance, $d_{min,x}$ means the minimum longitudinal relative distance to be maintained to the neighboring vehicle, and $d_x$ means the actual longitudinal relative distance between the own vehicle and the neighboring vehicle. In addition, $RSS_y$ means the lateral safety distance, $d_{min,y}$ means the minimum lateral relative distance to be maintained to the neighboring vehicle, and $d_y$ means the actual lateral relative distance between the own vehicle and the neighboring vehicle.

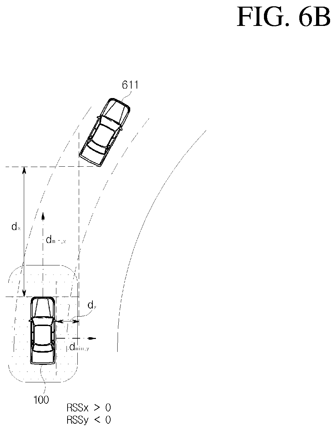

The MRM strategy determining unit 1330 may determine that the possibility of colliding with a neighboring vehicle is low (or unlikely to collide) if at least one among the longitudinal safety distance ($RSS_x$) and the lateral safety distance ($RSS_y$) to the neighboring vehicle is a positive number, even though an MRM with a driving path related to the neighboring vehicle is performed. In addition, even if a collision with a neighboring vehicle occurs, the MRM strategy determining unit 1330 may determine that the vehicle has no liability for the accident. For example, as shown in FIG. 6a, if the longitudinal safety distance ($RSS_x$) from the vehicle 100 to a right-front vehicle 601 is a negative number, but the lateral safety distance ($RSS_y$) thereof is a positive number, it may be determined that the possibility of colliding with the right-front vehicle 601 is low even if the MRM needing a lane change (e.g., the shoulder stop with lateral deviation, or the stop within shoulder) is performed. Also, even if the vehicle collides with the right-front vehicle 601, it may be determined that the own vehicle 100 has no liability for the accident. As another example, as shown in FIG. 6b, if the lateral safety distance ($RSS_y$) to a front vehicle 611 traveling in the same lane as the own vehicle 100 is a negative number, but the longitudinal safety distance ($RSS_x$) thereof is a positive number, even if the MRM needing a lane change (e.g., the shoulder stop with lateral deviation, or the stop within shoulder) is performed, it may be determined that the possibility of a collision with the front vehicle 611 is low, and even if the vehicle collides with the front vehicle 611, it may be determined that the own vehicle 100 has no liability for the accident.

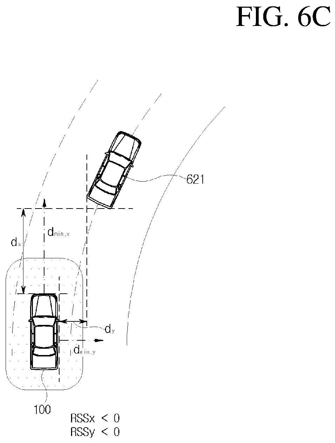

The MRM strategy determining unit 1330 may determine that the possibility of colliding with a neighboring vehicle is high (or there is the possibility to collide) when both the longitudinal safety distance ($RSS_x$) and the lateral safety distance ($RSS_y$) to the neighboring vehicle are negative numbers and the MRM having a driving path related to the neighboring vehicle is performed. In addition, if the vehicle collides with the neighboring vehicle, the MRM strategy determining unit 1330 may determine that the own vehicle has the liability for the accident. For example, as shown in FIG. 6c, if the longitudinal safety distance ($RSS_x$) and the lateral safety distance ($RSS_y$) from the own vehicle 100 to the right-front vehicle 621 are both negative numbers, it may be determined that the possibility to collide with the right-front vehicle 621 is high when the MRM needing a lane change is performed (e.g., the shoulder stop with lateral deviation, or the stop within shoulder). In addition, since the lane change of the own vehicle may be the cause of a collision with the right-front vehicle 621, the MRM strategy determining unit 240 may determine that the accident liability is in the own vehicle when a collision with the right-front vehicle 621 occurs.

The MRM strategy determining unit 1330 may select, as the final MRM, the in-lane stop having a lower priority than the stop within shoulder and the shoulder stop with lateral deviation when it is determined that the possibility of collision with a neighboring vehicle is high when the MRM needing a lane change is performed. In this case, the MRM strategy determining unit 1330 may calculate or determine the longitudinal safety distance and lateral safety distance to the rear vehicle traveling in the same lane as the own vehicle. The MRM strategy determining unit 1330 may determine that if at least one among the longitudinal safety distance and lateral safety distance to the rear vehicle is a positive number, the possibility of a collision with the rear vehicle is low even if the in-lane stop is performed, and even if the vehicle collides therewith, the liability for the accident is not in the own vehicle, and thus, the MRM strategy determining unit 1330 may select the in-lane stop as the final MRM. For example, as shown in FIG. 7, the own vehicle 100 may calculate or determine the longitudinal safety distance and the lateral safety distance to the rear-lateral vehicle 720 to perform the stop within shoulder 313 of Type 3, which has the highest priority, in a situation needing to perform the MRM. However, when both the longitudinal safety distance and the lateral safety distance to the rear-lateral vehicle 720 are negative numbers, there is a high possibility of colliding with the rear-lateral vehicle 720 due to a lane change needed in performing the stop within shoulder, and in the event of a collision with the rear-lateral vehicle 720, the own vehicle may have the liability for the collision. Therefore, since both the longitudinal safety distance and lateral safety distance between the own vehicle 100 and the rear vehicle 710 are positive numbers, the own vehicle 100 may select the stop within lane of Type 1, which has a lower priority than Type 4, as the final MRM strategy.

According to the example, the longitudinal safety distance and lateral safety distance between the own vehicle and the neighboring vehicle may be calculated or determined as in Mathematical Equations 2 and 3 below.

The Mathematical Equation 2 below is an equation for determining the longitudinal safety distance ($Rss_x$) 810 between the own vehicle Cr and the neighboring vehicle Cf as shown in FIG. 8a, and the Mathematical Equation 3 is an equation for determining the lateral safety distance ($Rss_y$) 820 between the own vehicle Cr and the neighboring vehicle Cf, as shown in FIG. 8b.

$$Rss_x = v_{x,r}\rho + \frac{a_{max,accel}\rho^2}{2} + \frac{(v_{x,r} + \rho a_{max,accel})^2}{2a_{min,brake}} - \frac{v_{x,r}^2}{2a_{max,brake}}$$

$$...... \text{ Equation (2)}$$

$$Rss_y = \mu + [\frac{2v_{y,r}\rho + a^{lat}_{max,accel}\rho^2}{2} + \frac{(v_{y,r} + \rho a^{lat}_{max,accel})^2}{2a^{lat}_{min,brake}}$$

$$- \left(\frac{2v_{y,f}\rho - a^{lat}_{max,accel}\rho^2}{2} \pm \frac{(v_{y,f} - \rho a^{lat}_{max,accel})^2}{2a_{max,brake}}\right)]$$

$$...... \text{ Equation (3)}$$

Here, $\rho$ may mean the reaction time, $\mu$ may mean the lateral margin, $a_{min,brake}$ may mean the minimum deceleration of the own vehicle, $a_{max,accel}$ may mean the maximum acceleration of the neighboring vehicle, and $a_{max,brake}$ may mean the maximum deceleration of the neighboring vehicle.

To calculate or determine the lateral safety distance and/or longitudinal safety distance, parameters of Mathematical Equations 2 and 3 may be set as shown in Table 1 below.

Table 1

| Param | Value |
|---|---|
| $\rho$ | 0.5(s) |
| $\mu$ | 0.4(m) |
| $a_{max,brake}$ | 6(m/s$^2$) |
| $a_{min,brake}$ | 8(m/s$^2$) |
| $a_{max,accel}$ | 0(m/s$^2$) |
| $a^{lat}_{min,brake}$ | 4(m/s$^2$) |
| $a^{lat}_{max,accel}$ | 0(m/s$^2$) |

The parameter values of Table 1 are not limited thereto.

According to the example, the MRM strategy determining unit 1330 may store, in the memory 160, the basis data for which the final MRM strategy is selected when the final MRM strategy is selected. The basis data may include at least one among presence of a shoulder within a specified MRC range, a shoulder size (e.g., length and/or width), a safe distance to a neighboring vehicle, vehicle state information of the own vehicle, or lane detection information. The MRM strategy determining unit 1330 may secure the basis for the selection of the MRM strategy having a low priority by storing the basis data for which the final MRM strategy is selected. For example, the MRM strategy determining unit 1330 may store, in the memory 160, at least one among information indicating abnormal operation of the lateral control function, a steering angle, a steering speed, information indicating a defect in the lane detection sensor, or sensing values of the lane detection sensor when the longitudinal stop of Type 7 is selected as the final MRM strategy. As another example, the MRM strategy determining unit 1330 may store information on the longitudinal safety distance and lateral safety distance to at least one neighboring vehicle calculated or determined in the MRM strategy selection process when the stop within lane of Type 1 is selected as the final MRM strategy, even if there is a shoulder in the specified MRC range.

According to various examples, the processor 130 may control to stop the vehicle according to the final MRM strategy, while controlling to notify other vehicles and/or drivers of information indicating that the MRM is underway. The control operation to stop the vehicle may include generating a travel trajectory for stopping the vehicle, and/or the lateral and/or longitudinal control that follows the generated travel trajectory. The processor 130 may control a display 140 to notify the driver that the vehicle is performing the MRM. As another example, the processor 130 may control the communication apparatus 150 to notify the other vehicle that the vehicle is performing the MRM. This is merely an example for helping understanding, and the method for notifying that the MRM is underway will not be limited thereto.

According to various examples, the processor 130 may perform the control operation for stopping the vehicle according to the determined MRM type, and determine whether the MRC is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined final MRM type. When the vehicle 100 gets into a state where the speed is 0, the processor 130 may determine that the MRC is satisfied.

According to various examples, when the MRC is satisfied, the processor 130 may end the MRM operation and switch the autonomous driving system (ADS) to a standby mode or an off-state. According to the example, the processor 130 may control the vehicle control authority to be transferred to the driver (or user) after switching the autonomous driving system (ADS) to the standby mode or off-state.

According to the example, the shoulder stop allowance space determining unit 1340 may calculate or determine the shoulder stop allowance space when the MRM type is the shoulder stop type. The detailed description thereof will be described below.

According to the example, the shoulder driving trajectory determining unit 1350 may calculate or determine the shoulder driving trajectory based on the shoulder stop allowance space. The detailed description thereof will be described below.

According to various examples, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information indicating whether various components included in the vehicle and/or at least one function of the vehicle are normally operated, and information indicating the driving state of the vehicle. The driving state of the vehicle may include, for example, at least one among a state in which the vehicle is autonomously driving, a state in which the MRM is underway, a state in which the MRM is completed, and a state in which the autonomous driving is ended.

According to various examples, the communication apparatus 150 may communicate with an external device of the vehicle 100. According to examples, the communication apparatus 150 may receive data from the outside of the vehicle 100 or transmit data to the outside of the vehicle 100 under the control of the processor 130. For example, the communication apparatus 150 may perform communication using a wireless communication protocol or a wired communication protocol.

In FIG. 1 described above, the controller 120 and the processor 130 have been described as separate components, but according to various examples, the controller 120 and the processor 130 may be integrated into one component.

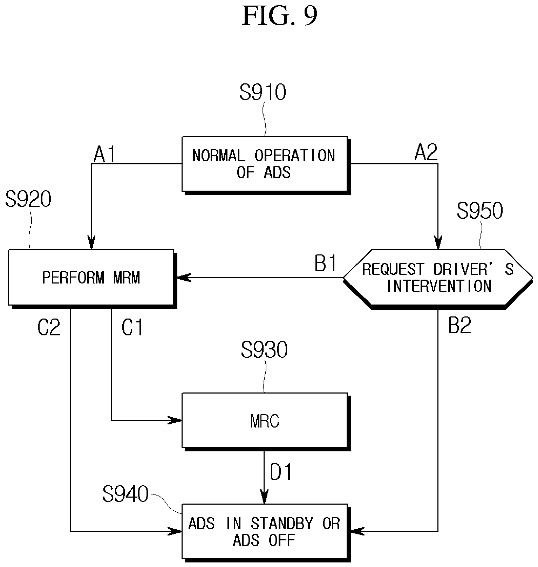

FIG. 9, FIG. 10, and FIG. 11 are described by way of examples in which the steps are performed by a processor (e.g., control circuitry). One, some, or all steps of FIG. 9, FIG. 10, and FIG. 11, or portions thereof, may be performed by one or more other circuits. One or some, steps of FIG. 9, FIG. 10, and FIG. 11 may be omitted, performed in other orders, and/or otherwise modified, and/or one or more additional steps may be added.

FIG. 9 shows an example of an operation of a vehicle according to various examples of the present disclosure. A vehicle of FIG. 9 may be the vehicle 100 of FIG. 1.

Referring to FIG. 9, the vehicle 100 may normally operate the ADS in an operation S910.

According to the example, the vehicle 100 may monitor the vehicle state and the surrounding environment while performing the autonomous driving according to the normal operation of the ADS. The vehicle 100 may detect whether the MRM is needed based on information obtained by monitoring the vehicle state and the surrounding environment. If the MRM is needed, an event A1 may be generated.

According to the example, the vehicle 100 may detect whether the driver (or user) intervention is needed while performing the autonomous driving according to the normal operation of the ADS. When driver intervention is needed, the vehicle 100 may perform a Request To Intervene (RTI) through the ADS or issue a warning. The driver intervention request or warning may be an event A2. The vehicle 100 may proceed to an operation S920 when the event A1 occurs in a state in which the ADS is normally operated.

When the event A2 occurs in a state in which the ADS operates normally, the vehicle 100 may determine whether the driver intervention is detected within a specified time in an operation S650. The vehicle 100 may determine that an event B1 has occurred when no driver intervention is detected within the specified time. When the event B1 occurs, the vehicle 100 may proceed to the operation S920. The vehicle 100 may determine that an event B2 has occurred when the driver intervention is detected within a specified time. When the event B2 occurs, the vehicle 100 may proceed to an operation S940.

The vehicle 100 may perform the MRM in the operation S920. According to the example, the vehicle 100 may determine the MRM type based on at least one among the vehicle state information and the surrounding environment information. The surrounding environment information may include road information and information on neighboring vehicles. The MRM types, as shown in FIG. 3, may include the stop within lane 311 of Type 1, the stop with one-side lateral deviation 312 of Type 2, the stop within shoulder 313 of Type 3, the shoulder stop with lateral deviation 314 of Type 4, the merge stop with double-side lateral deviation 315 of Type 5, the merge stop with longitudinal margin 316 of Type 6, and/or the longitudinal stop 317 of Type 7. The vehicle 100 may control at least one component in the vehicle to stop the vehicle according to the determined MRM type. According to the example, the vehicle 100 may store the basis data used in determining the MRM type in the memory 160.

The vehicle 100 may determine whether the minimum risk requirement is satisfied as the speed of the vehicle becomes 0 by performing the MRM in the operation S920. When the minimum risk requirement is satisfied, the vehicle 100 may determine that an event C1 has occurred and proceed to an operation S930. The vehicle 100 may determine whether the driver's intervention is detected while the MRM is underway. When the driver's intervention is detected, the vehicle 100 may determine that an event C2 has occurred and proceed to the operation S940.

In the operation S930, the vehicle 100 may maintain a state in which the minimum risk requirement is satisfied. The state in which the minimum risk requirement is satisfied may mean a state in which the vehicle is stopped. For example, the vehicle 100 may maintain a stopped state. For example, the vehicle 100 may perform control operation for maintaining the vehicle in a stopped state regardless of an inclination of a road surface at the stopped location. The vehicle 100 may determine whether an event D1 occurs while maintaining a state in which the minimum risk requirement is satisfied. An event D1 may include at least one among ADS being turned off the by the driver, and completion to transfer the vehicle control authority to the driver. When the event D1 occurs, the vehicle 100 may proceed to the operation S940.

The vehicle 100 may switch the ADS into a standby mode or an off-state in the operation S940. The vehicle 100 does not perform operation for the autonomous driving while the ADS is in a standby mode or an off-state.

The operations S910, S920, S930, and S950 described above may be in a state in which the ADS is activated, and the operation S940 may be in a state in which the ADS is inactive.

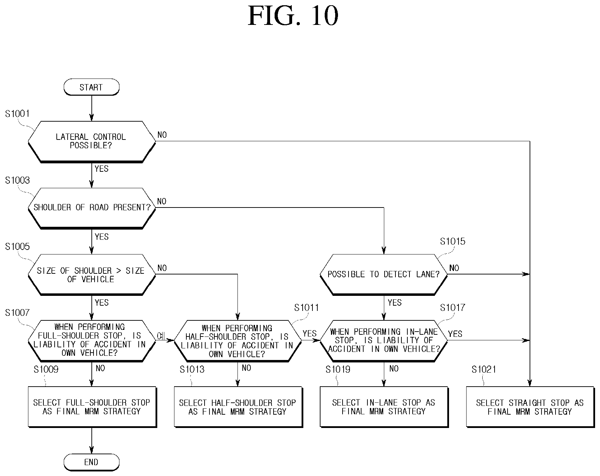

FIG. 10 shows an example of determining the MRM strategy by the vehicle according to various examples of the present disclosure. The operations of FIG. 10 may be detailed operations of the operation S920 of FIG. 9. In the following example, each operation may be sequentially performed, but is not necessarily performed sequentially. For example, the sequence of each operation may be changed, and at least two operations may be performed in parallel. In addition, the following operations may be performed by the processor 130 and/or the controller 120 provided in the vehicle 100 or implemented as instructions executable by the processor 130 and/or the controller 120.

Referring to FIG. 10, the vehicle 100 may determine whether the lateral control is possible based on the vehicle state information in an operation S1001. For example, the vehicle 100 may obtain the vehicle state information indicating whether a mechanical failure and/or an electrical failure of the components inside the vehicle occurs by monitoring a mechanical state and/or an electrical state of components (e.g., the sensor, the actuator, etc.) inside the vehicle. The vehicle 100 may determine whether the lateral control (or steering control) of the vehicle 100 is possible based on the vehicle state information indicating a mechanical state and/or electrical state of the sensor and/or actuator.

If the lateral control is impractical, the vehicle 100 may select the straight stop as the final MRM strategy in an operation S1021. For example, as shown in FIG. 3, since the vehicle 100 incapable of the lateral control may only perform the straight stop, the vehicle 100 may determine the straight stop as the final MRM strategy.

If the lateral control is possible, the vehicle 100 may determine whether a shoulder of a road exists within the MRC range in an operation S1003. For example, the vehicle 100 may determine whether a shoulder exists by checking road information within an MRC range corresponding to being within a specified distance centering on the own vehicle 100. The road information within the MRC range may be obtained from sensing data of sensors (e.g., the sensor 110) provided in the vehicle 100, or from map information obtained through the communication apparatus 150.

When there is no shoulder, the vehicle 100 may determine whether lane detection is possible in an operation S1015. For example, since the vehicle 100 may not perform the road shoulder stop strategy in a situation where a shoulder of a road does not exist, the vehicle 100 may check whether lane detection is possible in order to determine whether the in-lane stop is possible or not. The vehicle 100 may determine whether lane detection is possible or whether lane detection is impractical, based on the sensing value of the lane detection sensor.

When lane detection is impractical, the vehicle 100 may select the straight stop as the final MRM strategy in the operation S1021. For example, when it is impractical to detect a lane, the vehicle 100 may determine that the in-lane stop may not be performed, and may determine the straight stop as the final MRM strategy.

If the lane detection is possible, the vehicle 100 may determine whether liability for an accident is in the own vehicle during deployment (or fulfillment) of the in-lane stop in an operation 1017. For example, the vehicle 100 may calculate or determine a safety distance to the rear vehicle, and determine the possibility of a collision with the rear vehicle and whether to be liable for an accident based on the calculated or determined safety distance. The rear vehicle may mean a vehicle traveling in the same lane as the own vehicle. The safety distance to the rear vehicle may include the longitudinal safety distance and the lateral safety distance as shown in the Mathematical Equation 1. If the calculated or determined longitudinal safety distance and the lateral safety distance are both negative numbers, the vehicle 100 is highly likely to collide with the rear vehicle while performing the in-lane stop, and when a collision with the rear vehicle occurs, it may be determined that the liability for the accident is in the own vehicle. When at least one among the calculated or determined longitudinal safety distance and the lateral safety distance is a positive number, the vehicle 100 is unlikely to collide with the rear vehicle during fulfillment of the in-lane stop, and when a collision with the rear vehicle occurs, it may be determined that no liability for the accident is in the own vehicle.

When it is determined that the liability for the accident is in the own vehicle during fulfillment of the in-lane stop, the vehicle 100 may proceed to the operation S1021 and select the straight stop as the final MRM strategy.

When it is determined that liability for the accident is not in the own vehicle during fulfillment of the in-lane stop, the vehicle 100 may select the in-lane stop as the final MRM strategy in an operation S1019.

If a road shoulder exists as a result of the check in the operation S1003, the vehicle 100 may determine whether a size of the shoulder is greater than a size of the vehicle in an operation S1005. For example, the vehicle 100 may compare a width of the shoulder to a width of the vehicle to determine whether the vehicle may perform the stop within shoulder or the shoulder stop with lateral deviation.

When the size of the shoulder is greater than the size of the vehicle, the vehicle 100 may determine that the stop within shoulder is possible, and the vehicle may determine whether the liability for the accident is in the own vehicle when the stop within shoulder is performed in an operation 1007. For example, the vehicle 100 may calculate or determine a driving path for fulfillment of the stop within shoulder, and may calculate or determine a safety distance to at least one neighboring vehicle related to the calculated or determined driving path. The at least one neighboring vehicle related to the driving path for the stop within shoulder fulfillment may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated or determined safety distance. The safety distance to at least one neighboring vehicle may include the longitudinal safety distance and the lateral safety distance as shown in the Mathematical Equation 1. If the calculated or determined longitudinal safety distance and lateral safety distance are both negative numbers, the vehicle 100 is highly likely to collide with at least one neighboring vehicle when the stop within shoulder is performed, and may determine that the liability for the accident is in the own vehicle when a collision with the vehicle occurs. If at least one among the calculated or determined longitudinal safety distance and the lateral safety distance is a positive number, the vehicle may determine that the possibility of the vehicle 100 to collide with at least one neighboring vehicle during fulfillment of the stop within shoulder is low, and the liability for the accident if a collision with the vehicle occurs is not in the own vehicle.

When it is determined that the liability for the accident is not in the own vehicle during fulfillment of the stop within shoulder, the vehicle 100 may select the stop within shoulder as the final MRM strategy in an operation S1009.

When it is determined that the liability for the accident is in the own vehicle when the stop within shoulder is performed, the vehicle 100 may proceed to an operation S1011 to determine whether the liability for the accident is in the own vehicle when the stop with lateral deviation is performed. For example, the vehicle 100 may calculate or determine a driving path for fulfillment of the stop with lateral deviation, and may calculate or determine a safety distance to at least one neighboring vehicle related to the calculated or determined driving path. The at least one neighboring vehicle related to the driving path for fulfillment of the stop with lateral deviation may include at least one among a vehicle on a front-lateral side, a side vehicle, and/or a vehicle on a rear-lateral side. The vehicle 100 may determine the possibility of a collision with at least one neighboring vehicle and whether to be liable for the accident based on the calculated or determined safety distance. The safety distance to at least one neighboring vehicle may include the longitudinal safety distance and the lateral safety distance as shown in the Mathematical Equation 1. If the calculated or determined longitudinal safety distance and lateral safety distance are both negative numbers, the vehicle 100 is highly likely to collide with at least one neighboring vehicle when the stop with lateral deviation is performed, and may determine that the liability for the accident is in the own vehicle when a collision with the vehicle occurs. If at least one among the calculated or determined longitudinal safety distance and lateral safety distance is a positive number, the vehicle 100 may determine that the possibility of the vehicle 100 to collide with at least one neighboring vehicle during fulfillment of the stop with lateral deviation is low, and the liability for the accident if a collision with the vehicle occurs is not in the own vehicle.

When it is determined that the liability for the accident is not in the own vehicle during fulfillment of the stop with lateral deviation, the vehicle 100 may select the stop with lateral deviation as the final MRM strategy in an operation S1013.

When it is determined that the liability for the accident is in the own vehicle when the stop with lateral deviation is performed, the vehicle 100 may proceed to an operation S1017.

As described above, when the vehicle according to various examples of the present disclosure detects a situation in which normal autonomous driving is impractical during the autonomous driving, the vehicle may determine the MRM strategy in consideration of liability for an accident per MRM type based on the vehicle state information and/or surrounding environment information, thereby safety may be improved while minimizing the risk of the vehicle.

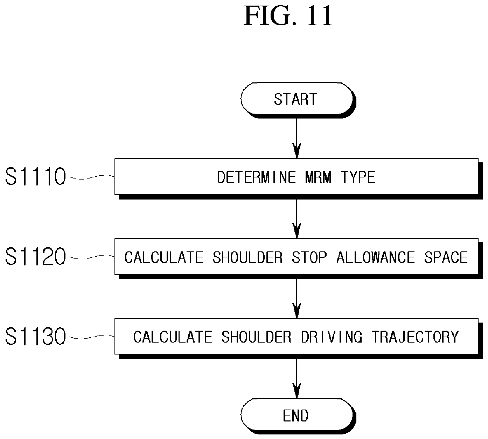

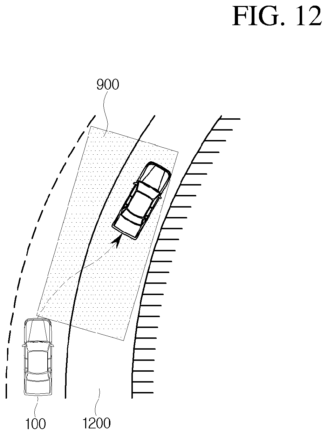

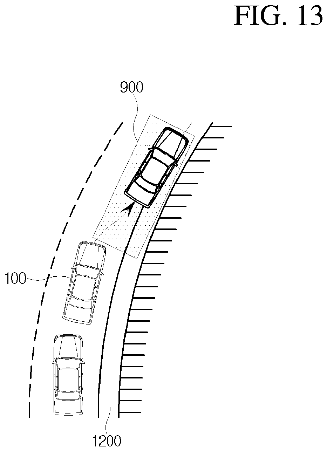

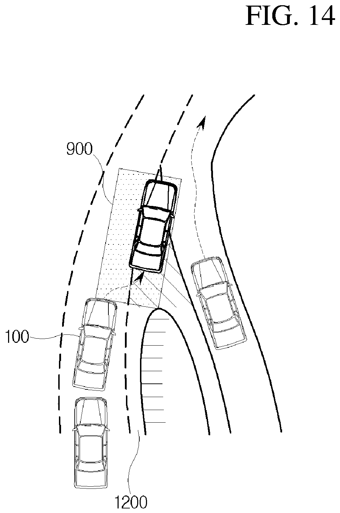

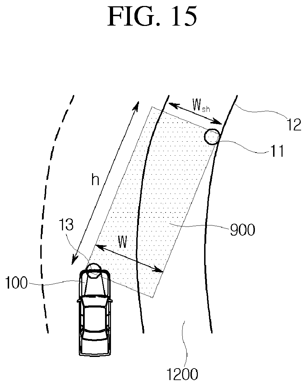

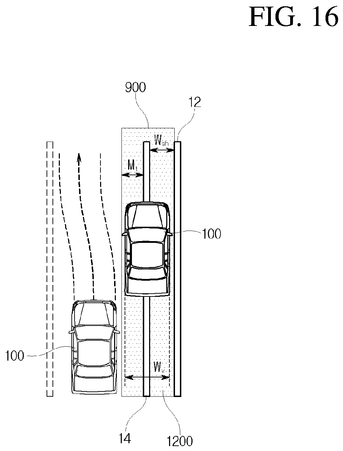

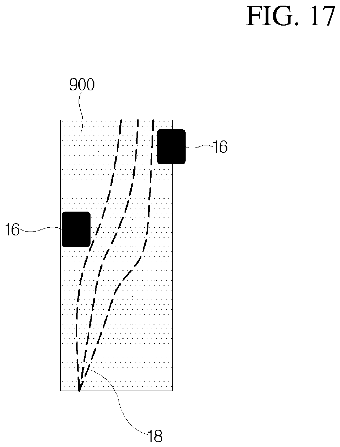

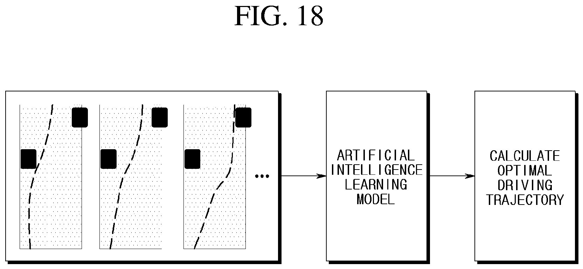

FIG. 11 shows an example of determining the shoulder stop allowance space and the shoulder driving trajectory when the shoulder stop is conducted during an autonomous driving according to various examples of the present disclosure. The vehicle of FIG. 11 may be the vehicle 100 of FIG. 1. FIG. 12 shows an example of determining the shoulder stop allowance space when the final MRM strategy according to various examples of the present disclosure is the stop within shoulder type. FIG. 13 shows an example of determining the shoulder stop allowance space when the final MRM strategy according to various examples of the present disclosure is the shoulder stop with lateral deviation type. FIG. 14 shows an example of determining the shoulder stop allowance space when the final MRM strategy according to various examples of the present disclosure is the merge stop with double-side lateral deviation type. FIGS. 15 and 16 show examples of determining the shoulder stop allowance space by the vehicle according to various examples of the present disclosure. FIGS. 17 and 18 show examples of determining the shoulder driving trajectory by the vehicle according to various examples of the present disclosure.

Referring to FIG. 11, the vehicle according to various examples of the present disclosure may determine whether the MRM is needed based on at least one among the surrounding environment information and the vehicle state information during the autonomous driving of the vehicle 100 in an operation S1110, and when it is determined that the MRM is needed, the vehicle 100 may determine the MRM type.

The shoulder stop type is an example, and may be any one among the stop within shoulder 313 of Type 3, the shoulder stop with lateral deviation 314 of Type 4, the merge stop with double-side lateral deviation 315 of Type 5, and the merge stop with longitudinal margin 316 of Type 6.

The processor 130 may calculate or determine the shoulder stop allowance space when the MRM type determined in an operation S1120 is the shoulder stop type. The processor 130 may calculate or determine the shoulder driving trajectory based on the shoulder stop allowance space in an operation S1130. According to the example, the processor 130 may calculate or determine the shoulder stop allowance space, when it is determined that the fulfillment of the MRM is needed and the MRM type is the shoulder stop type. According to the example, the processor 130 may calculate or determine the shoulder stop allowance space, when the processor 130 receives a shoulder stop request from the driver.

Referring to FIGS. 12 to 14, the shoulder stop allowance space 900 means a region in which the vehicle 100 may stop at the fulfillment of the shoulder stop, and may be a virtual region which has a longitudinal size and a lateral size. As an example, the shoulder stop allowance space 900 may be a quadrangle, but is not limited thereto, and may be set as a combination of polygonal shapes having various shapes.

FIG. 12 shows the shoulder stop allowance space 900 which is calculated or determined in the stop within shoulder 313 of Type 3, FIG. 13 shows the shoulder stop allowance space 900 of the shoulder stop with lateral deviation 314 of Type 4, and FIG. 14 shows the shoulder stop allowance space 900 of the merge stop with double-side lateral deviation 315 of Type 5.

The stop within shoulder 313 of Type 3 shown in FIG. 12 may be the safest shoulder stop type because the whole vehicle 100 is located within the shoulder 1200 in the shoulder stop allowance space 900. In the case of the shoulder stop with lateral deviation 314 of Type 4 in FIG. 13 and the merge stop with double-side lateral deviation 315 of Type 5 in FIG. 14, although the vehicle 100 as a whole may not be located within the shoulder 1200 in the shoulder stop allowance space 900 and a portion of the vehicle crosses the line, the allowable lane crossing distance may be set in consideration of an avoidable lateral space through a collision evasive lateral maneuver (CELM) of the other vehicle.

Referring to FIG. 15, the processor 130 may calculate or determine the longitudinal size h of the shoulder stop allowance space 900 based on the speed of the vehicle 100 and a preset time required for the shoulder stop (e.g., a time required from a start to completion of the shoulder stop), using a prestored algorithm. In more detail, the processor 130 may calculate or determine the longitudinal size h of the shoulder stop allowance time 900 using a Mathematical Equation 4.

$$h = v \times t_{ss}$$

$$...... \text{ Equation (4)}$$

Here, h means the longitudinal size of the shoulder stop allowance space, v means the speed of the vehicle, and $t_{ss}$ means the preset time required for the shoulder stop.

When the road is a straight road as shown in the stop within shoulder 313 type of the MRM type 3 in FIG. 12, a reference value which is stored in advance may be applied as the longitudinal size of the shoulder stop allowance space 900.

According to the example, the processor 130 may calculate or determine a lateral size W of the shoulder stop allowance space 900 based on a width of the shoulder $W_{sh}$ and a preset allowable lane crossing distance, using the prestored algorithm. In more detail, the processor 130 may recognize the shoulder based on the surrounding environment information, calculate or determine the width of the shoulder $W_{sh}$, and calculate or determine a value obtained by adding the preset allowable lane crossing distance to the width $W_{sh}$ of the shoulder as the lateral size W of the shoulder stop allowance space, using the prestored algorithm.

As an example, the allowable lane crossing distance may be 1m, but is not limited thereto, and may have various values according to a setting.

According to the example, the processor 130 may calculate or determine the longitudinal size h and the lateral size W of the shoulder stop allowance space 900, using the prestored algorithm, and may indicate or generate the shoulder stop allowance space 900 in a prestored digital map based on the calculated or determined longitudinal size h and the lateral size W.

For example, the processor 130 may visually indicate the shoulder stop allowance space 900 in the prestored digital map through the display 140.

According to the example, when the shoulder has a curved shape, the processor 130 may calculate or determine the shoulder stop allowance space 900 by rotating a quadrangular (e.g., any four-sided polygon, any shape or structure having four angles or sides) virtual region about a center point of a bumper 13 of the vehicle 100. The virtual region may be a two-dimensional rectangle which has four regions and four line segments. The virtual region may be a rectangular region located in front of the vehicle 100, and two long line segments of the four line segments of the virtual region may be formed to be parallel to a travel direction of the vehicle 100, and the remaining two short line segments thereof may be formed to be perpendicular to the travel direction of the vehicle 100. The processor 130 may set an edge area on one side among four edge areas of the virtual region to be located at the center point of the bumper 13 of the vehicle 100. When the shoulder has a curved shape, the processor 130 may calculate or determine or set the shoulder stop allowance space 900 by rotating the quadrangular virtual region about the center point of a bumper 13 of the vehicle 100 in a direction of the shoulder. A rotation angle may be an angle at which an edge area on another side 11 in a diagonal direction of the edge area on the one side, which is located at the center point 13 of the bumper of the vehicle 100, is rotated to be located on an outer line 12 of the shoulder 1200.

According to the example, when the shoulder has a curved shape, the processor 130 may indicate or generate the shoulder stop allowance space 900 in the digital map in rotated shape about the center point of a bumper 13 of the vehicle 100 with respect to the curved shoulder. The processor 130 may visually indicate the shoulder stop allowance space 900 having a rotated shape with respect to the curved shoulder in the prestored digital map through the display 140.

In more detail, the processor 130 may determine whether the shoulder 1200 has a curved shape based on the surrounding environment information, and if the shoulder 1200 has a curved shape, the processor 130 may rotate the shoulder stop allowance space 900 about the center point of a bumper 13 of the vehicle 100 so that the lateral edge area 11 of the shoulder stop allowance space 900 may be located on the outer line 12 of the shoulder 1200.

According to the example, the processor 130 may select a final shoulder for stopping based on the line crossing distance Mt when a plurality of shoulders are recognized based on the surrounding environment information during the autonomous driving of the vehicle 100. The line crossing distance Mt may mean a degree at which the vehicle 100 deviates in an inward direction of a lane based on the line 14 neighboring to the shoulder 1200, in the shoulder stop allowance space 900. For example, a vehicle is driving on a highway and needs to perform a minimal risk maneuver by pulling over to the shoulder. The line crossing distance represents how far the vehicle deviates inward from the edge of the lane (e.g., the solid line marking the boundary between the lane and the shoulder) as the vehicle moves into the shoulder stop allowance space 900. For example, a line crossing distance, -0.5 meter, indicates that the vehicle is within the safe stopping boundary, as it is not protruding into the lane but has fully entered the shoulder with an additional 0.5 meter margin of safety. The line crossing distance shows the extent to which the vehicle deviates from the lane toward the shoulder.

According to the example, the processor 130 may select a shoulder having a small line crossing distance Mt among the plurality of shoulders as the final shoulder for stopping.

Referring to FIG. 16, the processor 130 may calculate or determine the line crossing distance Mt based on a width $W_v$ of the vehicle, a width of the shoulder $W_{sh}$, and a preset margin constant $\delta_2$ of vehicle stopping. In more detail, the processor 130 may calculate or determine the line crossing distance Mt using a Mathematical Equation 5.

$$M_t = W_v - W_{sh} + \delta_2$$

$$\text{...... Equation (5)}$$

Here, Mt means the line crossing distance, $W_v$ means a width of the vehicle, $W_{sh}$ means a width of the shoulder, and $\delta_2$ means a preset margin constant of stopping. As an example, the margin constant $\delta_2$ of vehicle stopping may be 0.375(m), but is not limited thereto, and may have various values according to a setting.

For example, when the line crossing distance Mt is 0, it means that the vehicle 100 may stop within the shoulder 1200 completely, and when the line crossing distance Mt is a positive number, it means that the vehicle 100 may deviate from the shoulder 1200, and may cross the line 14 which neighbors to the shoulder 1200.

According to the example, when the calculated or determined line crossing distance Mt exceeds a preset reference line crossing distance, the processor 130 may adjust the lateral size of the shoulder stop allowance space 900 such that the line crossing distance Mt becomes to be within the preset reference line crossing distance. According to the example, the processor 130 may indicate or generate the shoulder stop allowance space 900, of which the lateral size is adjusted, in the digital map. The reference line crossing distance may be 1(m), but is not limited thereto, and may have various values according to a setting.

Referring to FIG. 17, the processor 130 may calculate or determine a plurality of travel trajectories 18 from a location of the vehicle within the lane to the shoulder, based on a location of a collision risk object 16 within the finally calculated or determined shoulder stop allowance space 900. In more detail, the processor 130 may determine the location of the collision risk object 16 within the shoulder stop allowance space 900 based on the surrounding environment information, and may calculate or determine the plurality of travel trajectories 18 within the shoulder stop allowance space 900 based on the location of the collision risk object 16.

According to the example, when the shoulder has a curved shape, the processor 130 may convert the shoulder stop allowance space 900 having a rotated shape into the shoulder stop allowance space 900 having a vertical or a horizontal shape, which is an aligned shape as shown in FIG. 17, and may calculate or determine the plurality of travel trajectories 18 within the shoulder stop allowance space 900 having the aligned shape.

Referring to FIG. 18, the processor 130 may calculate or determine an optimized shoulder driving trajectory from the plurality of travel trajectories 18 within the shoulder stop allowance space 900, using a prestored artificial intelligence learning model.

According to the example, the artificial intelligence learning model may be a learning model, which is supervised and learned based on learning data, to which the plurality of travel trajectories 18 within the shoulder stop allowance space 900 are input, and from which an optimized shoulder driving trajectory is output, using a prestored artificial intelligence algorithm. According to the example, the prestored algorithm may be a machine learning algorithm, or a deep learning algorithm.

According to the example, when the shoulder has a curved shape, the processor 130 may use the plurality of travel trajectories 18 within the shoulder stop allowance space 900 having the aligned shape as an input image. The processor 130 may calculate or determine the optimized shoulder driving trajectory within the shoulder stop allowance space 900 having a rotated shape through a coordinate conversion process, after determining the travel trajectory.

Accordingly, various examples of the present disclosure disclose a vehicle that controls the steering when conducting the shoulder stop according to a minimal risk maneuver during an autonomous driving.

Various examples of the present disclosure disclose a method for operating the vehicle that controls the steering when conducting the shoulder stop according to the minimal risk maneuver during the autonomous driving.

Technical objects to be achieved by the present disclosure are not limited to the aforementioned objects, and those skilled in the art to which the present disclosure pertains may evidently understand other technical objects from the following description.

One example is an autonomous driving vehicle, including: at least one sensor configured to detect a surrounding environment of the vehicle to generate surrounding environment information; a processor configured to monitor a state of the vehicle to generate vehicle state information and to determine whether a minimum risk maneuver is needed based on at least one among the surrounding environment information and the vehicle state information during an autonomous driving of the vehicle; and a controller configured to control operation of the vehicle according to control of the processor, and the processor may be configured to determine a minimum risk maneuver type when the processor determines that the minimum risk maneuver is needed; to calculate or determine a shoulder stop allowance space when the determined minimum risk maneuver type is a shoulder stop type; and to calculate or determine a shoulder driving trajectory based on the shoulder stop allowance space.

The shoulder stop allowance space may be a virtual region which has a longitudinal size and a lateral size, and the processor may calculate or determine a longitudinal size of the shoulder stop allowance space based on a speed of the vehicle and a preset time required for shoulder stop.

The processor may calculate or determine the longitudinal size of the shoulder stop allowance space using a mathematical equation, $h = v \times t_{ss}$.

(h is a longitudinal size of a shoulder stop allowance space, v is a speed of a vehicle, and $t_{ss}$ is a preset time required for shoulder stop)

The processor may calculate or determine the lateral size of the shoulder stop allowance space based on a width of a shoulder and a preset allowable lane crossing distance.

The processor may recognize a shoulder and calculate or determines the width of the shoulder based on the surrounding environment information, and calculate or determine a value obtained by adding the preset allowable lane crossing distance to the width of the shoulder as the lateral size of the shoulder stop allowance space.

The processor may determine whether the shoulder has a curved shape based on the surrounding environment information, and when the shoulder has a curved shape, the processor may calculate or determine the shoulder stop allowance space by rotating a quadrangular virtual region about a center point of a bumper of the vehicle.

When a plurality of shoulders are recognized based on the surrounding environment information during the autonomous driving of the vehicle, the processor may select, based on a line neighboring to the shoulder in the shoulder stop allowance space, a final shoulder for stopping based on a line crossing distance indicating a degree at which the vehicle deviates in an inward direction of the line.

The processor may select a shoulder having the line crossing distance which is small among the plurality of shoulders as the final shoulder for stopping.

The processor may calculate or determine the line crossing distance based on a width of the vehicle, a width of the shoulder, and a preset margin constant of stopping.

The processor may calculate or determine the line crossing distance using a mathematical equation, $Mt = W_v - W_{sh} + \delta_2$.

($Mt$ is a line crossing distance, $W_v$ is a width of a vehicle, $W_{sh}$ is a width of a shoulder, and $\delta_2$ is a preset margin constant of stopping)

The processor may determine a location of a collision risk object within the shoulder stop allowance space based on the surrounding environment information, and calculate or determine a plurality of driving trajectories within the shoulder stop allowance space based on the location of the collision risk object.

The processor may calculate or determine an optimized shoulder driving trajectory using an artificial intelligence learning model to which the plurality of driving trajectories are input.

A method for operating an autonomous driving vehicle, including: obtaining surrounding environment information by detecting a surrounding environment of the vehicle during an autonomous driving of the vehicle; obtaining vehicle state information by monitoring a state of the vehicle during the autonomous driving of the vehicle; determining whether a minimal risk maneuver is needed based on at least one among the surrounding environment information and the vehicle state information during the autonomous driving of the vehicle; determining a minimal risk maneuver type when it is determined that the minimal risk maneuver is needed; determining a shoulder stop allowance space when the determined minimal risk maneuver type is a shoulder stop type; and determining a shoulder driving trajectory based on the shoulder stop allowance space.

The shoulder stop allowance space may be a virtual region which has a longitudinal size and a lateral size, and the determining a shoulder stop allowance space may include determining a longitudinal size of the shoulder stop allowance space based on a speed of the vehicle and a preset time required for shoulder stop.

The determining a longitudinal size of the shoulder stop allowance space may include determining a lateral size of the shoulder stop allowance space based on a width of a shoulder and a preset allowable lane crossing distance.

The determining a lateral size of the shoulder stop allowance space may include: recognizing a shoulder based on the surrounding environment information, and determining the width of the shoulder; and determining a value obtained by adding the preset allowable lane crossing distance to the width of the shoulder as the lateral size of the shoulder stop allowance space.

The determining a shoulder stop allowance space may further include: determining whether the shoulder has a curved shape based on the surrounding environment information; and determining the shoulder stop allowance space by rotating a quadrangular virtual region about a center point of a bumper of the vehicle, when the shoulder has a curved shape.

The method may further include: when a plurality of shoulders are recognized based on the surrounding environment information during the autonomous driving of the vehicle, selecting, based on a line neighboring to the shoulder in the shoulder stop allowance space, a final shoulder for stopping based on a line crossing distance indicating a degree at which the vehicle deviates in an inward direction of the line.

The selecting a final shoulder for stopping based on a line crossing distance may include determining the line crossing distance based on a width of the vehicle, a width of the shoulder, and a preset margin constant of stopping.

The determining a shoulder driving trajectory based on the shoulder stop allowance space may include: determining a location of a collision risk object within the shoulder stop allowance space based on the surrounding environment information; determining a plurality of driving trajectories within the shoulder stop allowance space based on the location of the collision risk object; and determining an optimized shoulder driving trajectory using an artificial intelligence learning model to which the plurality of driving trajectories are input.

As described above, various examples of the present disclosure may calculate or determine the shoulder stop allowance space which corresponds to a type of a shoulder when stopping on the shoulder according to the MRM strategy is needed during the autonomous driving, and may calculate or determine the optimized shoulder driving trajectory.

## EP 4 674 717 A1

Claims

1.  An apparatus for controlling autonomous driving of a vehicle, the apparatus comprising:

    at least one sensor configured to detect a surrounding environment of the vehicle and generate surrounding environment information; and
    a processor configured to:

    monitor a state of the vehicle to generate vehicle state information;
    determine, based on at least one of the surrounding environment information or the vehicle state information, whether to perform a risk maneuver for the autonomous driving of the vehicle;
    determine, based on a determination to perform the risk maneuver, a risk maneuver type;
    determine, based on the risk maneuver type being a shoulder stop type, a shoulder stop allowance space;
    determine, based on the shoulder stop allowance space, a shoulder driving trajectory;
    output a signal indicating the should driving trajectory; and
    control, based on the signal, the autonomous driving of the vehicle.

2.  The apparatus of claim 1, wherein the shoulder stop allowance space comprises a virtual region having a longitudinal size and a lateral size, and
    wherein the processor is configured to determine, based on a speed of the vehicle and a preset time required for shoulder stop, the longitudinal size.

3.  The apparatus of claim 2, wherein the processor is configured to determine the longitudinal size based on a product of the speed of the vehicle and the preset time required for shoulder stop, and/or wherein the processor is configured to determine, based on a width of a shoulder and a preset allowable lane crossing distance, the lateral size.

4.  The apparatus of claim 3, wherein the processor is configured to:

    recognize the shoulder;
    determine, based on the surrounding environment information, the width of the shoulder; and
    determine, based on a sum of the preset allowable lane crossing distance and the width of the shoulder, the lateral size.

5.  The apparatus of anyone of claims 2-4, wherein the processor is configured to:

    determine, based on the surrounding environment information, whether the shoulder has a curved shape; and
    based on a determination that the shoulder has the curved shape, determine the shoulder stop allowance space by rotating a quadrangular virtual region about a center point of a bumper of the vehicle.

6.  The apparatus of anyone of claims 2-5, wherein the processor is configured to:

    based on the surrounding environment information during the autonomous driving of the vehicle, recognize a plurality of shoulders; and
    select, based on a line neighboring to a shoulder in the shoulder stop allowance space and a line crossing distance, a final shoulder among the plurality of shoulders for stopping, wherein the line crossing distance indicates a degree at which the vehicle deviates in an inward direction of the line.

7.  The apparatus of claim 6, wherein the processor is configured to select a shoulder having the line crossing distance as the final shoulder for stopping, and wherein the line crossing distance is a smallest line crossing distance among a plurality of line crossing distances respectively associated with the plurality of shoulders, and/or wherein the processor is configured to determine, based on a width of the vehicle, a width of the shoulder, and a preset margin constant of stopping, the line crossing distance.

8.  The apparatus of claim 7, wherein the line crossing distance is based on a difference between a width of the vehicle and a width of a shoulder and based on an added preset margin constant of stopping.

9.  The apparatus of anyone of claims 2-8, wherein the processor is configured to:
    determine, based on the surrounding environment information, a location of a collision risk object within the shoulder

19

stop allowance space; and

determine, based on the location of the collision risk object, a plurality of driving trajectories within the shoulder stop allowance space, wherein, optionally, the processor is configured to derive an adjusted shoulder driving trajectory by inputting the plurality of driving trajectories to an artificial intelligence learning model.

10. A method performed by an apparatus for controlling autonomous driving of a vehicle, the method comprising:

obtaining surrounding environment information by detecting a surrounding environment of the vehicle during the autonomous driving of the vehicle;

obtaining vehicle state information by monitoring a state of the vehicle during the autonomous driving of the vehicle;

determining, based on at least one of the surrounding environment information or the vehicle state information, whether to perform a risk maneuver for the autonomous driving of the vehicle;

determining, based on a determination to perform the risk maneuver, a risk maneuver type;

determining, based on the risk maneuver type being a shoulder stop type, a shoulder stop allowance space;

determining, based on the shoulder stop allowance space, a shoulder driving trajectory;

outputting a signal indicating the shoulder driving trajectory; and

controlling, based on the signal, the autonomous driving of the vehicle.

11. The method of claim 10, wherein the shoulder stop allowance space comprises a virtual region having a longitudinal size and a lateral size, and wherein the determining the shoulder stop allowance space comprises determining, based on a speed of the vehicle and a preset time required for shoulder stop, the longitudinal size.

12. The method of claim 11, wherein the determining the longitudinal size comprises determining, based on a width of a shoulder and a preset allowable lane crossing distance, the lateral size, wherein, optionally, the determining the lateral size comprises: identifying, based on the surrounding environment information, the shoulder and determining the width of the shoulder; and determining, based on a sum of the preset allowable lane crossing distance and the width of the shoulder, the lateral size.

13. The method of claim 11 or 12, wherein the determining shoulder stop allowance space further comprises:

determining, based on the surrounding environment information, whether the shoulder has a curved shape; and

based on determining that the shoulder has a curved shape, determining the shoulder stop allowance space by rotating a quadrangular virtual region about a center point of a bumper of the vehicle.

14. The method of anyone of claims 10-13, further comprising:

identifying, based on the surrounding environment information during the autonomous driving of the vehicle, a plurality of shoulders; and

selecting, based on a line neighboring to a shoulder in the shoulder stop allowance space and a line crossing distance, a final shoulder among the plurality of shoulders for stopping, wherein the line crossing distance indicates a degree at which the vehicle deviates in an inward direction of the line, wherein, optionally, the selecting the final shoulder for stopping comprises determining, based on a width of the vehicle, a width of the shoulder, and a preset margin constant of stopping, the line crossing distance.

15. The method of anyone of claims 10-14, wherein the determining the shoulder driving trajectory comprises:

determining, based on the surrounding environment information, a location of a collision risk object within the shoulder stop allowance space;

determining, based on the location of the collision risk object, a plurality of driving trajectories within the shoulder stop allowance space; and

deriving an adjusted shoulder driving trajectory by inputting the plurality of driving trajectories to an artificial intelligence learning model.

FIG. 1

# FIG. 2

130

1321 1320 1322 1340

SURROUNDING ENVIRONMENT
INFORMATION OBTAINING UNIT

| VEHICLE STATE INFORMATION OBTAINING UNIT | ROAD INFORMATION OBTAINING UNIT | NEIGHBORING OBJECT INFORMATION OBTAINING UNIT | SHOULDER STOP ALLOWANCE SPACE CALCULATING UNIT |

1310

1350

SHOULDER DRIVING TRAJECTORY CALCULATING UNIT

MRM STRATEGY DETERMINING UNIT

1330

# FIG. 3

| Category | In-lane Stop (301) | | Shoulder Stop (302) | | | | Straight Stop (303) |
|---|---|---|---|---|---|---|---|
| Classification | Type 1 | Type 2 | Type 3 | Type 4 | Type 5 | Type 6 | Type 7 |
| | Stop within lane (311) | Stop with one-side lateral deviation (312) | Stop within shoulder (313) | Shoulder stop with lateral deviation (314) | Merge stop with double-side lateral deviation (315) | Merge stop with longitudinal margin (316) | Longitudinal stop (317) |
| Description | | | | | | | |
| brake control (321) | Available | Available | Available | Available | Available | Available | Available |
| lateral control (322) | Available | N/A | Available | Available | Available | Available | N/A |
| lane detection (323) | Available | N/A | Available | Available | Available | Available | N/A |
| shoulder detection (324) | N/A | N/A | Available | Available | Available | Available | N/A |

FIG. 4A

FIG. 4B

FIG. 5

# FIG. 6A

RSSx < 0
RSSy > 0

FIG. 6B

# FIG. 6C

621

$d_{min,x}$

$d_x$

$d_y$

$d_{min,y}$

100

RSSx < 0
RSSy < 0

FIG. 7

## FIG. 8A

FIG. 8B

# FIG. 9

S910

A1    NORMAL OPERATION
OF ADS    A2

S920

S950

PERFORM MRM    B1 ← REQUEST DRIVER'S
INTERVENTION

C2    C1        B2

S930

MRC

D1

S940

ADS IN STANDBY OR
ADS OFF

# FIG. 10

# FIG. 11

```
                    ┌─────────────┐
                    │    START    │
                    └──────┬──────┘
                           │
                           ▼
S1110 ──┌────────────────────────────────────────────┐
        │          DETERMINE MRM TYPE                 │
        └────────────────────┬───────────────────────┘
                             │
                             ▼
S1120 ──┌────────────────────────────────────────────┐
        │   CALCULATE SHOULDER STOP ALLOWANCE SPACE   │
        └────────────────────┬───────────────────────┘
                             │
                             ▼
S1130 ──┌────────────────────────────────────────────┐
        │   CALCULATE SHOULDER DRIVING TRAJECTORY     │
        └────────────────────┬───────────────────────┘
                             │
                             ▼
                    ┌─────────────┐
                    │     END     │
                    └─────────────┘
```

FIG. 12

FIG. 13

FIG. 14

FIG. 15

FIG. 16

FIG. 17

FIG. 18

Europäisches
Patentamt

European
Patent Office

Office européen
des brevets

# EUROPEAN SEARCH REPORT

**Application Number**

EP 25 15 4403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/406354 A1 (PARK JONG SUNG [KR] ET AL) 21 December 2023 (2023-12-21)<br>* figures 1-6 *<br>* paragraphs [0009] - [0012], [0020], [0040], [0063], [0065], [0069], [0077], [0079], [0081] - [0089] *<br>* the whole document *<br>----- | 1-15 | INV.<br>B60W30/095<br>B60W60/00<br><br>ADD.<br>B60W50/029 |
| X | US 2024/109539 A1 (LEE JONG HYUCK [KR] ET AL) 4 April 2024 (2024-04-04)<br>* figures 1-9 *<br>* paragraphs [0005] - [0009], [0046], [0048], [0054], [0057] - [0064], [0084] - [0085], [0089] - [0090] *<br>* the whole document *<br>----- | 1-15 | |
| A | US 2019/318173 A1 (KRISTENSEN STEEN [DE] ET AL) 17 October 2019 (2019-10-17)<br>* figures 1-7 *<br>* paragraph [0042] *<br>* the whole document *<br>----- | 2,11 | |

**TECHNICAL FIELDS SEARCHED (IPC)**

B60W

The present search report has been drawn up for all claims

| Place of search | Date of completion of the search | Examiner |
|---|---|---|
| Munich | 18 June 2025 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4403

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | | Publication date | Patent family member(s) | | Publication date |
|---|---|---|---|---|---|
| US 2023406354 | A1 | 21-12-2023 | CN | 117246317 A | 19-12-2023 |
| | | | EP | 4292899 A1 | 20-12-2023 |
| | | | KR | 20230173252 A | 27-12-2023 |
| | | | US | 2023406354 A1 | 21-12-2023 |
| US 2024109539 | A1 | 04-04-2024 | CN | 120003535 A | 16-05-2025 |
| | | | EP | 4393786 A1 | 03-07-2024 |
| | | | JP | 2024052617 A | 11-04-2024 |
| | | | KR | 20250036787 A | 14-03-2025 |
| | | | US | 2024109539 A1 | 04-04-2024 |
| US 2019318173 | A1 | 17-10-2019 | CN | 109477725 A | 15-03-2019 |
| | | | DE | 102016212587 A1 | 11-01-2018 |
| | | | EP | 3482160 A1 | 15-05-2019 |
| | | | JP | 6785939 B2 | 18-11-2020 |
| | | | JP | 2019527418 A | 26-09-2019 |
| | | | US | 2019318173 A1 | 17-10-2019 |
| | | | WO | 2018010891 A1 | 18-01-2018 |

EPO FORM P0459

For more details about this annex : see Official Journal of the European Patent Office, No. 12/82

**EP 4 674 717 A1**

**Patent documents cited in the description**

- KR 1020240086265